# EUROPEAN PATENT SPECIFICATION

(11) **EP 1 159 054 B1**
(45) Date of publication and mention of the grant of the patent: **02.04.2003**
(21) Application number: 99949303.4
(22) Date of filing: 03.11.1999
(51) Int. Cl.: B01D 29/11

(54) **FILTER FOR LIQUIDS**
FILTER FÜR FLÜSSIGKEITEN
FILTRE POUR LIQUIDES

(30) Priority: 05.11.1998 IT PD980256
(43) Date of publication of application: 05.12.2001
(73) Proprietor: Minichiello, Luigi, 35036 Montegrotto Terme (IT); Minichiello, Berardino, 35031 Abano Terme (IT)
(72) Inventor: Minichiello, Luigi, 35036 Montegrotto Terme (IT); Minichiello, Berardino, 35031 Abano Terme (IT)
(74) Representative: Modiano, Guido, Dr.-Ing.
(86) International application number: IB9901773
(87) International publication number: WO00027499

(56) References cited:
- EP-A- 0 089 446
- WO-A-95/00783
- DE-U- 29 602 053
- DE-U- 29 702 744
- US-A- 3 982 520
- US-A- 4 700 670
- US-A- 4 933 080

## Description

The present invention relates to a filter for fluids.

### Background art

Pressure filters meant to filter fluids and liquids and known in the field as "cartridge filters", in which the filtration medium is a tubular element commonly termed filter cartridge or filter candle, have long been known and used.

Typical fields of application of these filters are, for example, the filtration of water for domestic use, for technical-scientific use and for industrial uses.

In particular, despite the variety of embodiments, cartridge filters are substantially constituted by a hollow conveying body which houses at least one filter cartridge which is associated with a head with inlet and outlet ports which can be connected to the application circuits and associated ducts.

Moreover, the head is in turn hermetically connected to the filter body.

Ducts and accesses to the filter are formed in the head and determine, from the inlet port to the outlet port, a very specific path for the fluid to be filtered, which is forced to pass through the filter cartridge.

Though the variety of embodiments, filter cartridges offer a certain resistance to the flow of water, and this leads to a pressure drop which adds to the pressure drop caused by the characteristics of the filtration system and of the associated ducts.

The pressure drop is a typical characteristic of each filter cartridge and can vary according to the materials of which it is made and according to its degree of filtration.

The extent of the pressure drop must be measured when the cartridge is at the beginning of its use, and experience has shown that it increases in value, sometimes even considerably, during its operation as the level of the clogging of the cartridge increases.

It is inevitably evident that the deposit retained by the filter cartridge, over time, severely compromises the functionality of said cartridge and accordingly must be removed in some manner.

Two different solutions are currently commercially available: a first solution has non-washable or throwaway filter cartridges, in which the filtered particles remain trapped mainly inside the filtering barrier and, when their number forces excessively high pressure drops, the filter requires replacement of the entire cartridge; a second solution, instead, provides for washable or regenerable filter cartridges which, by virtue of their constructive characteristics, after a certain period of work can be cleaned and reused for a new working cycle.

Washable or regenerable cartridges are often preferable with respect to throwaway cartridges, first of all due to the saving on their cost and then because their degree of filtration can be determined more easily and more precisely. Moreover, they have a low pressure drop, which increases by a modest extent as the level of clogging of the cartridge increases.

In most commercially available cartridges, filtration, and therefore the passage of the water to be filtered, occurs from the outside toward the inside of the cartridges.

Such cartridges are referred hereinafter as "normal-flow" cartridges.

However, some kinds of cartridge are commercially available for which, in order to allow correct operation, the flow of the water to be filtered, and therefore the filtration, must occur from the inside toward the outside of said cartridges.

These cartridges are referred hereinafter as "reverse-flow" cartridges.

The existence of these last cartridges would entail, for manufacturers, the provision of filters with a different indication of the inlet and outlet ports, i.e., it would entail dual production, with a considerable increase in production costs.

In actual fact, dual production hardly ever occurs, and therefore these cartridges are almost always used by installing them and operating them incorrectly.

These cartridges, too, can be washable, and, if washing is possible, this operation must occur in the opposite direction with respect to the filtration, i.e., from the outside toward the inside of the cartridges.

The cartridges can be washed somewhat crudely by removing the cartridge from the unit and washing it with a jet of clean water while brushing it.

The best, most practical and effective method is in any case to clean the cartridges by subjecting them, without removing them from the unit, to back-washing by means of a stream of water in the opposite direction with respect to the filtration direction.

Various solutions which allow to wash the cartridge are commercially available: the most widely used ones are described hereinafter.

In particular, one solution provides true back-washing. In this type of embodiment, by actuating controls located outside the filter, the flow of water is diverted toward the inside of the cartridge, the outlet is closed and the particles retained by the cartridge, which have been detached by the reversal of the flow, deposit in the body of the filter and are drained by means of a valve which is located on the bottom of said filter and is actuated from outside.

Flow diversion occurs by means of valves, pistons and/or movable walls included in the filter.

Another solution instead provides for brushing, and in practice the filter is provided with brushes located inside its body so that the respective ends touch the outside walls of the filter cartridge.

The cartridge is fixed at its two ends, which have respective shaped pivots which are connected to an external knob on the head and, at the other end, to a valve located on the bottom of the filter.

By way of the actuation of the knob, the filter cartridge is turned through 90 degrees while the filter is still under pressure, so as to make the walls of the filter cartridge rub against the brushes arranged inside the filter, while the pivots of the ends of the cartridge, by turning, close the outlet and open the drain on the bottom of the filter.

The particles detached by the brushing action are propelled by the water flow toward the drain; this operation must be repeated several times in order to achieve an appreciable result.

Filters which combine the two above-described kinds of washing are also commercially available.

However, commercially available filters have often the drawback that they do not ensure perfect separation between the filtered water and the drain water, especially during the actuation of the moving parts, be they valves, pistons or the cartridge itself.

Another remark relates to fluid filters of the cartridge type, which must be able to meet other requirements, and particularly:
-- they must allow the elimination of the air that remains trapped inside the filter whenever, for maintenance or other purposes, after emptying the water from the filter or from the entire system downstream of said filter, one wishes to restart it;
-- they must allow release of the hydraulic pressure from the filter whenever the filter is to undergo maintenance or cleaning operations;
-- they must allow replacement of the filter cartridge by closing the flow of water both upstream and downstream of said cartridge;
-- they must ensure the delivery of water, even if it is not filtered, during maintenance of the filter or replacement of the filter cartridge;
-- particularly in the domestic environment, they must ensure a second service branch with unfiltered water for secondary uses such as, for example, all uses linked to gardening and indoor and outdoor domestic cleaning;
-- they must allow to clean the cartridge, if a cartridge of the washable type is used, without having to remove it from the body in which it is housed and without interrupting the delivery of water, even if it is not filtered.

In order to simultaneously solve these requirements, in the practice of plant design one resorts to a system of external bypass pipes with a drain duct and with control valves which divert the flow toward the filter or outside it or toward the drain and allow to perform back-washing and all the operations described above.

However, it is evident that although such a solution solves the drawbacks substantially permanently, it entails increasing the complexity of the plant and purchasing and installing fitting components.

US-A-4,933,080 discloses a water filter as defined in the preamble of claim 1.

### Summary of the Invention

The aim of the present invention is to provide a filter for fluids which solves the drawbacks noted above of conventional filters, extending the operating possibilities of cartridge filters without the need for external plant interventions to be performed with installation.

Within the scope of this aim, an important object of the present invention is to allow the back-washing of the filter cartridge without having to remove it from the seat inside the filter body and without interrupting the delivery of water, although it is unfiltered.

Another important object of the present invention is to provide a filter which allows to release unfiltered water to the user in a bypass mode, with isolation of the filter body and relief of the pressure inside it, in order to allow all the operations for maintenance of the cartridge of said filter.

Another object of the present invention is to provide a filter which allows the closure and complete isolation, both upstream (at the inlet) and downstream (at the outlet), of the filter, with release the pressure inside it.

Another object of the present invention is to provide a filter which allows delivery of unfiltered water on a secondary water line for particular uses.

Another object of the present invention is to provide a filter which allows delivery of filtered water on a secondary water line.

Another object of the present invention is to provide a filter which allows to filter water simultaneously both on the main line and on the secondary line.

Another object of the present invention is to provide a filter which allows the delivery of filtered water on the main line and at the same time of unfiltered water on the secondary water line.

Another important object of the present invention is to provide a filter which allows the performance of back-washing of the filter cartridge, interrupting the delivery of water to the user, and closure of the filter without releasing the pressure inside the body.

Another object of the present invention is to provide a filter which allows the delivery of unfiltered water in bypass mode on both lines or delivery of unfiltered water in bypass mode only to the user, without releasing the pressure inside the filter body.

Another object of the present invention is to provide a filter which is practical, efficient, constructively simple, commercially convenient, which simultaneously meets all the operating requirements listed above, is extremely compact and easy to install and maintain, maintenance being reduced to a small number of simple operations.

Another object of the present invention is to provide a filter which can be manufactured with conventional technologies and equipment and at costs which are competitive with respect to commercially available filters.

This aim, these objects and others which will become apparent hereinafter are achieved by a filter for liquids according to claim 1.

Preferred embodiments of the invention are described by the appended dependent claims.

### Brief description of the drawings

Further characteristics and advantages of the present invention will become apparent from the following detailed description of seven embodiments thereof, illustrated only by way of non-limitative example in the accompanying drawings, wherein:
Figure 1 is a perspective view of a filter according to the present invention in a first embodiment;
Figure 2 is a partially exploded perspective view of the filter of Figure 1;
Figure 3 is a perspective view of a detail of the filter of Figure 1;
Figure 4 is a sectional view of the detail of Figure 3;
Figure 5 is a schematic sectional view of the filter of Figure 1;
Figure 6 is a schematic sectional view of a filter according to the present invention in a second embodiment;
Figure 7 is a schematic sectional view of a filter according to the present invention in a third embodiment;
Figure 8 is a schematic sectional view of a filter according to the present invention in a fourth embodiment;
Figure 9 is a schematic sectional view of a filter according to the present invention in a fifth embodiment;
Figure 10 is a schematic sectional view of a filter according to the present invention in a sixth embodiment;
Figure 11 is a schematic sectional view of a filter according to the present invention in a seventh embodiment.

### Description of the preferred embodiments

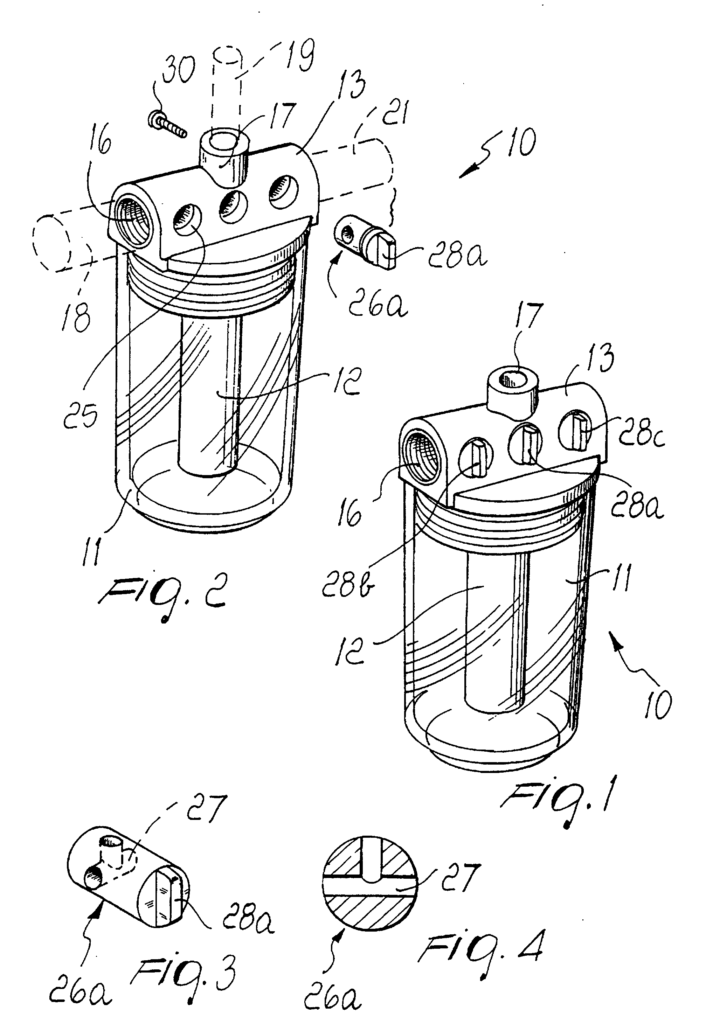

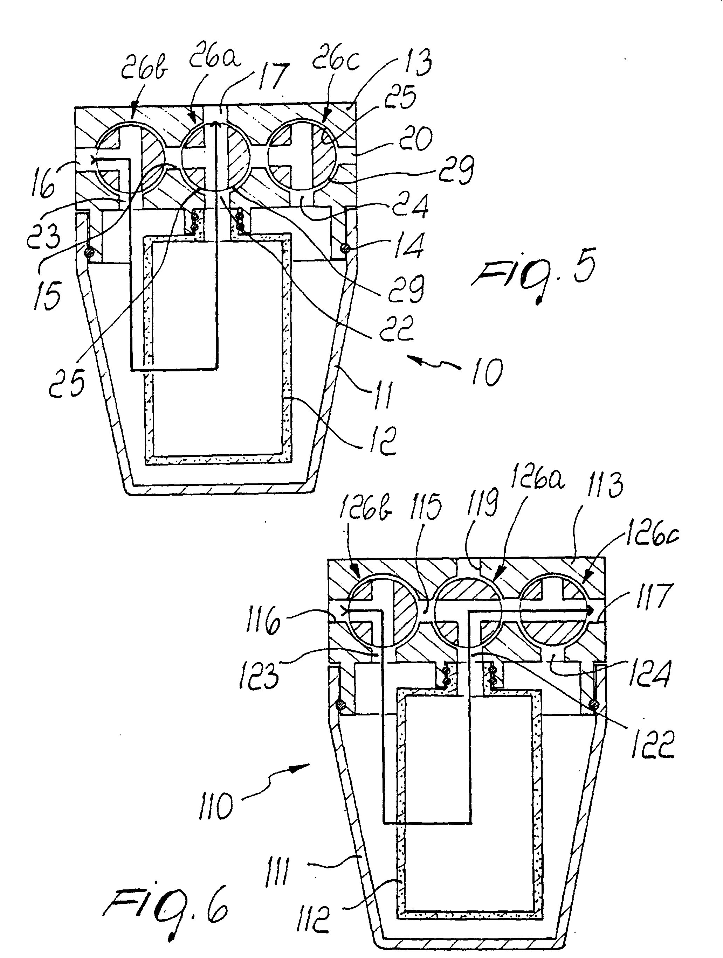

With particular reference to Figures 1 to 5, a filter for fluids according to the present invention is generally designated by the reference numeral 10.

The filter 10 comprises, inside a hollow conveying body 11, which in this case has a jar-like shape, a filtering medium which is constituted by a cylindrical cartridge 12 which is arranged so that its longitudinal axis is vertical and is associated with a head 13 by means of its upper end.

Head 13 is fixed to the body 11 hermetically by means of an annular gasket 14 of a per se known type and has, in an internal part, a manifold 15 which runs at right angles to the longitudinal axis of the filter cartridge 12 and can form inlet and outlet ports, respectively designated by the reference numerals 16 and 17, which can be connected by means of a respective feeder duct 18 and outlet duct 19, to main branches of a hydraulic circuit.

A drain port 20 is further formed in the head 13, is located at the opposite end with respect to the inlet port 16, is connected to manifold 15 and can be connected externally to a corresponding drain duct 21 (secondary branch of the hydraulic circuit).

At least a first connecting duct 22 extends from the manifold 15 into the filter 10 in order to provide a connection to the inside of the filter cartridge 12; at least a second connecting duct 23 and a third connecting duct 24 also extend from said duct for connection to free parts of the inside of the hollow body 11.

In this case, there are flow diverter valves, as specified in greater detail hereinafter, which are housed in adapted seats 25, each of which is interposed in a region where the manifold 15 connects to the connecting ducts 22, 23 and 24.

In this particular embodiment, each one of the diverter valves, respectively designated by the reference numerals 26a, 26b and 26c at the first, second and third connecting ducts 22, 23 and 24, allows, under the action of the operator, variance of the configuration of the connections of the feeder, outlet and drain ducts 18, 19 and 21 to the filter 10, so as to allow a matching number of different operating states.

In particular, in this case valves 26a, 26b and 26c are constituted by cylindrical valves, each formed by a T-shaped passage 27 formed in a cylindrical body which is arranged at right angles to manifold 15 and is shaped so as to form, at one end, a knob, designated by the reference numerals 28a, 28b and 28c respectively, which can be arranged outside the head 13 for actuation by the operator.

In this manner, more simply, each one of the valves 26a, 26b and 26c is of the three-way type.

Clearly, each valve 26a, 26b and 26c is housed in the corresponding seat 25 and is provided with a sealing gasket 29 which from the structural point of view has the shape of a sleeve which completely wraps around each valve 26a, 26b and 26c.

As an alternative, it is possible to provide for example sealing rings of the O-ring type or the like.

In this case, each one of said valves 26a, 26b and 26c is retained in the head 13 by using a screw 30 which passes through it and engages a complementarily threaded seat, not shown for the sake of simplicity, which is formed in the cylindrical body of the valve 26a, 26b and 26c at the opposite end with respect to the knob 28a, 28b and 28c.

In practice, the operation of the filter 10 allows a plurality of different configurations which are set, through the adjustment of the knobs 28a, 28b and 28c, by the valves, which in this case allow the following connections:
-- the valve 26b can connect the feeder duct 18 to the second connecting duct 23 towards the inside of the hollow body 11;
-- the valve 26a can connect the outlet duct 19 to the first connecting duct 22 towards the inside of the filter cartridge 12;
-- the valve 26c can connect the drain duct 21 to the third connecting duct 24 for connection to the inside of the hollow body 11.

Moreover, all three valves can connect the portions of the manifold 15 between which they are arranged.

The following results are obtained:
-- filtration on the main line, by opening the second connecting duct 23 to the feeder duct 18 and the first connecting duct 22 to the outlet duct 19, while the valve 26c closes the drain duct 21, as shown in Figure 5;
-- back-washing of the cartridge without interrupting the main line, which is served with unfiltered fluid, by closing the second connecting duct 23 and connecting the feeder duct 18 to the first connecting duct 22 and to the outlet duct 19, while the valve 26c connects the third connecting duct 24 to the drain duct 21;
-- upstream and downstream closure of the filter 10, with isolation thereof and release of the hydraulic pressure by way of the closure of the feeder duct 18, of the closure of the outlet duct 19 and of the connection of the third connecting duct 24 to the drain duct 21.

By means of appropriate adjustments of the valves 26a, 26b and 26c, it is also possible to achieve:
-- delivery of unfiltered liquid on the main line (outlet duct 19), with isolation of the body of the filter 10 and release of the hydraulic pressure;
-- delivery of unfiltered liquid on the secondary line (drain duct 21);
-- simultaneous filtration on both lines, i.e., on the main line and on the secondary line;
-- filtration only on the secondary line;
-- filtration on the main line and, simultaneously, delivery of unfiltered liquid on the secondary line;
-- back-washing of the cartridge with interruption of the main line;
-- closure of the filter upstream and downstream and on the secondary line, therefore without pressure relief;
-- delivery of unfiltered liquid on both lines (dual bypass);
-- delivery of unfiltered liquid on the main line without pressure release.

This embodiment can be used only with normal-flow cartridges, since using the reverse-flow cartridges would entail a configuration of the passages in which cross-flow would occur through the valve 26a during the primary step of filtration.

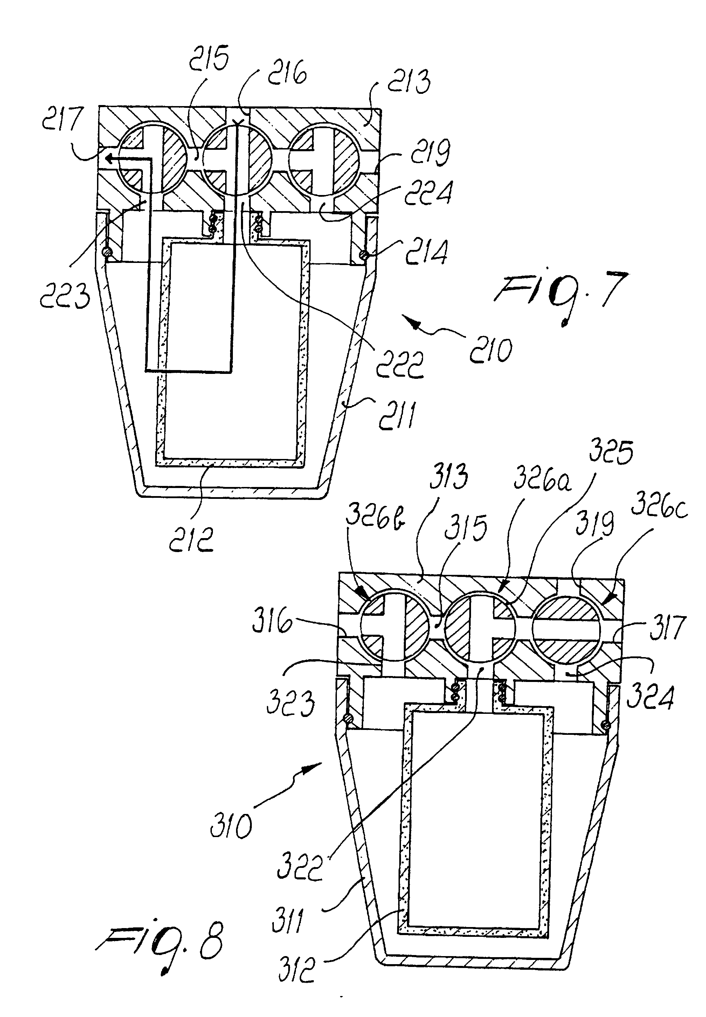

With particular reference to Figure 6, a filter according to the invention, in a second embodiment, is generally designated by the reference numeral 110.

In this second embodiment too, the filter 110 comprises, inside a hollow body 111, a filter cartridge 112 which is arranged vertically and is associated with a head 113 in the upper part.

Head 113 forms, inside it, a manifold 115 which is arranged at right angles with respect to the longitudinal axis of the cartridge 112 and is connected to the outside by means of an inlet port 116 and an outlet port 117 which are mutually opposite.

Such ports can be connected to respective feeder and outlet ducts, not shown for the sake of simplicity, of a hydraulic circuit of which they constitute the primary branches.

In this particular embodiment, the head 113 has a drain port 119 which runs coaxially with respect to the cartridge 112 and can be connected to a corresponding drain duct (which constitutes a secondary branch for the hydraulic circuit).

It is clearly noticeable that this second embodiment differs from the preceding one (having reference number 10) in that in this case the inlet port 116 and the outlet port 117 are mutually opposite, whereas the drain port 119 is formed so as to lie opposite the body 111.

Also in this case, a first connecting duct 122, meant for connection to the inside of the filter cartridge 112, a second connecting duct 123 and a third connecting duct 124 for connection to the free parts of the inside of the hollow body 111, extend from the manifold 115.

The filter 110 is conveniently completed by valves, now designated by the reference numerals 126a, 126b and 126c, which in this case are also cylindrical and of the three-way type and are arranged respectively at the first, second and third connecting ducts 122, 123 and 124.

In this case, the inlet port 116 is located at the second connecting duct 123, the drain port 119 corresponds to the first connecting duct 122 and the outlet port 117 is located at the third connecting duct 124.

The different configuration of the filter 110 with respect to filter 10 of the first embodiment of the invention allows the use of reverse-flow cartridges in addition to normal cartridges 112.

In particular, if normal-flow filter cartridges 112 are used, one obtains:
-- filtration on the main line, as shown in Figure 6, by connecting the inlet port 116 to the second connecting duct 123 and by simultaneously connecting the first connecting duct 122 to the outlet port 117 while the drain port 119 is closed by the valve 126a;
-- closure upstream and downstream of the filter, with isolation thereof and release of the hydraulic pressure, by closing the inlet port 116, directly connecting the first connecting duct 122 to the drain port 119 and closing the outlet port 117;
-- delivery on the secondary line (delivery from the drain port) of unfiltered liquid, by directly connecting the inlet port 116 to the drain port 119 and simultaneously closing the outlet port 117;
-- simultaneous filtration on both lines;
-- filtration only on the secondary line;
-- closure upstream, downstream and on the secondary line (therefore without releasing pressure);
-- delivery of unfiltered fluid on both lines (dual bypass);
-- delivery of unfiltered liquid on the main line without full isolation of the filter body, without pressure release.

It is very important to stress that the filter 110, if a reverse-flow filter cartridge 112 is used, allows:
-- filtration on the main line, by directly connecting the inlet port 116 to the first connecting duct 122, simultaneously closing the drain port 119 and connecting the third connecting duct 124 and the outlet port 117;
-- back-washing of the cartridge without interrupting the main line, which is served with unfiltered liquid, by connecting the inlet port to the second connecting duct 123, directly connecting the first connecting duct 122 to the drain port 119 and connecting the third connecting duct 124 to the outlet port 117;
-- closure upstream and downstream of the filter, with isolation of said filter and release the hydraulic pressure, by closing the inlet port 116 and the outlet port 117 and by directly connecting the first and/or third connecting ducts 122 and 124 to the drain port 119;
-- delivery of unfiltered liquid on the secondary line;
-- filtration on the main line and simultaneous delivery of unfiltered liquid on the secondary line;
-- back-washing of the cartridge with interruption of the main line;
-- closure of the filter upstream, downstream and on the secondary line, without releasing the pressure;
-- delivery of unfiltered liquid on both lines (dual bypass);
-- delivery of unfiltered liquid on the main line, with isolation of the filter body, without pressure release.

With particular reference to Figure 7, a filter according to the present invention, in a third embodiment, is generally designated by the reference numeral 210 and comprises, inside a hollow body 211, a filter cartridge 212 which is associated with a head 213 which is in turn fixed hermetically, by means of gaskets 214, to the body 211.

A manifold 215 is formed in the head 213, runs at right angles to the axis of the cartridge 212 and can be connected to a hydraulic circuit by means of an inlet port 216, an outlet port 217 and a drain port 219.

In this particular constructive solution, the outlet port 217 and the drain port 219 are mutually opposite, whereas the inlet port 216 is formed coaxially to the filter cartridge 212.

The manifold 215, as in the preceding versions 10 and 110, is provided with a first connecting duct 222 for connection to the inside of the cartridge 212, which in this case is located so as to directly correspond to the inlet port 216, and with a second connecting duct 223 and a third connecting duct 224 for connection to the inside of the hollow body 211 which are respectively arranged at the outlet port 217 and at the drain port 219.

The configuration of the filter 210 only allows the use of filter cartridges 212 of the reverse-flow type (with normal cartridges, cross-flow would occur during the primary step of filtration).

In particular, one obtains:
-- filtration on the main line, as shown in Figure 7, by directly connecting the inlet port 216 to the first connecting duct 222, closing the drain port 219 and simultaneously connecting the second connecting duct 223 to the outlet port 217;
-- closure upstream and downstream of the filter, with isolation thereof and release hydraulic pressure, by closing the inlet port 216 and the outlet port 217 and by connecting the third connecting duct 224 to the drain port 219;
-- delivery of unfiltered liquid on the main line (bypass), with isolation of the filter body and pressure release;
-- delivery of unfiltered liquid on the secondary line;
-- simultaneous filtration on both lines;
-- filtration on the secondary line only;
-- filtration on the main line and simultaneous delivery of unfiltered liquid on the secondary line;
-- closure of the filter upstream, downstream and on the secondary line, therefore without releasing hydraulic pressure;
-- delivery of unfiltered fluid on both lines (dual bypass);
-- delivery of unfiltered liquid on the main line with isolation of the filter body, therefore without pressure release.

With particular reference to Figure 8, a filter in a fourth embodiment of the present invention is designated by the reference numeral 310 and has, in a manner which is fully similar to the filters described earlier, a hollow body 311 inside which there is, in a vertical configuration, a filter cartridge 312 which is associated with a head 313 with a manifold 315 provided with an inlet port 316, an outlet port 317 and a drain port 319, all of which can be connected to respective ducts of a main line and of a secondary line.

Also in this case, the manifold 315 has a first connecting duct 322 for connection to the inside of the cartridge 312 and a second connecting duct 323 and a third connecting duct 324 for connection to the free parts of the inside of the hollow body 311.

Moreover, the head 313 houses, in a corresponding number of seats 325, cylindrical valves 326a, 326b and 326c which can be actuated by the operator and control the accesses of the first, second and third connecting ducts 322, 323 and 324, respectively.

In particular, in this case the valves designated by the reference numerals 326a and 326b are of the three-way type with a T-shaped passage, whereas the valve designated by the reference numeral 326c is of the one-way type with a straight passage and controls the connection of the third connecting duct 324 to the outlet port 317 or, as an alternative, to the drain port 319.

In this constructive solution, the valve 326b in fact controls the connection between the inlet port 316, the second connecting duct 323 and the manifold 315, whereas the valve 326a controls the connection of the first connecting duct 322 to the manifold 315 toward the inlet port 316 and/or toward the outlet port 317/drain port 319.

The described filter 310 has a limited functionality, although the main functions regarding filtration and washing of the cartridge and closure with pressure release are maintained.

In another variation, the valve 326a can be of the L-shaped two-way type.

It is possible to perform filtration, back-washing, and closure with pressure release.

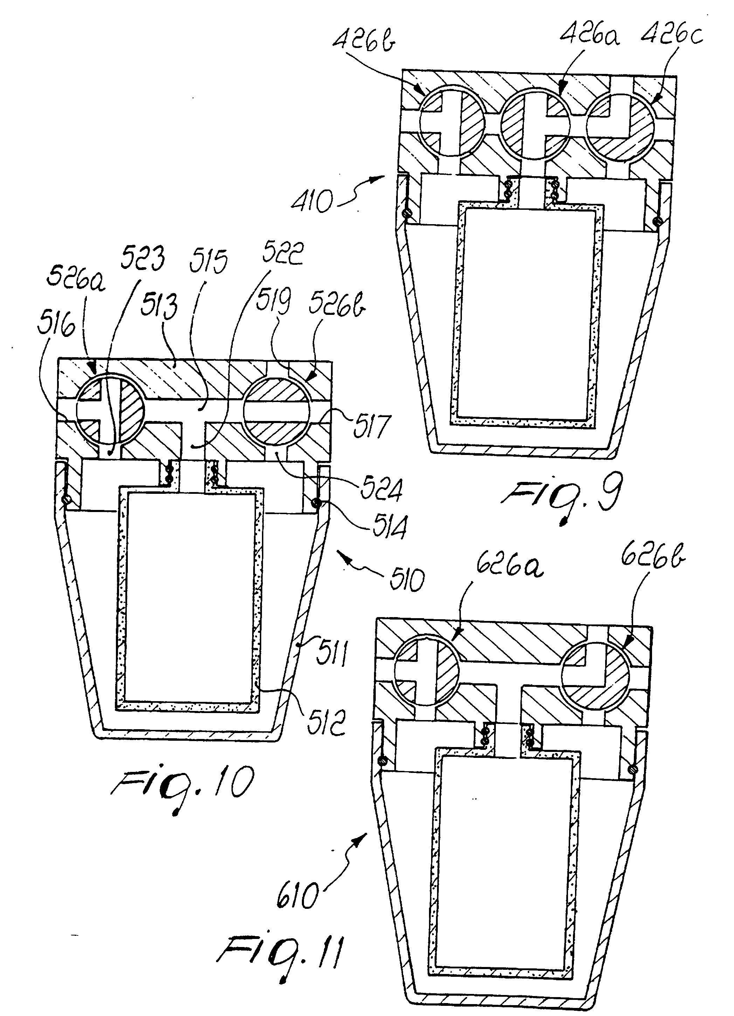

With particular reference to Figure 9, a filter in a fifth embodiment of the present invention is now designated by the reference numeral 410, is substantially equivalent to the filter 310 and differs therefrom in that it has three valves, now designated by the reference numerals 426a, 426b and 426c, the first two of which are of the three-way type with a T-shaped passage, as in the preceding version, while the third valve 426c is of the two-way type but has an L-shaped angular passage.

In another embodiment, the valve 426a can be of the L-shaped two-way type.

It is possible to perform filtration, back-washing and closure with pressure release.

With particular reference to Figure 10, a filter in a sixth embodiment of the present invention is generally designated by the reference numeral 510 and substantially does not differ from the preceding filters, since it too includes a hollow body 511 inside which a cartridge 512 is present which is associated with a head 513 which is in turn fixed by means of sealing elements 514 to said body 511.

The manifold 515 is formed in the head 513, is connected to the outside by means of an inlet port 516, an outlet port 517 and a drain port 519, and is connected to the inside of the cartridge 512 by means of the first connecting duct 522 and to the free parts of the inside of the hollow body 511 by means of the second and third connecting ducts 523 and 524.

In this case, the filter 510 comprises only two valves, designated by the reference numerals 526a and 526b, which are housed in a corresponding number of seats 525 arranged respectively at the second and third connecting ducts 523 and 524, whereas said first connecting duct 522 is directly connected to said manifold 515.

In particular, the valve 526a is of the three-way type with a T-shaped passage and the valve 526b is of the two-way type with a straight passage.

With particular reference to Figure 11, a filter for fluids in a seventh embodiment of the present invention is designated by the reference numeral 610 and does not differ from the above-described filter 510 except for the fact that the two valves are now designated by the reference numerals 626a and 626b and that the first valve 626a is of the three-way type with a T-shaped passage, whereas the other valve 626b is of the two-way type with an L-shaped angular passage.

It is particularly interesting to note that with the filter configurations designated by the reference numerals 310, 410, 510 and 610, which are structurally simpler than the preceding ones, it is possible to use only normal-flow filter cartridges, but by reversing the positions of the drain ports with the outlet ports it is possible to use reverse-flow cartridges.

In practice it has been observed that the present invention has achieved more than satisfactorily the proposed aim and all the objects.

The filter according to the invention can also be produced in simpler and accordingly cheaper configurations, which however allow at least the main functions.

It should also be noted that the filter according to the invention entails the considerable and decisive advantage of not requiring any external bypass circuit, eliminating the costs related to the assembly and purchase of the associated components.

The supply must be under pressure in any case, whereas it is advisable not to subject the secondary branch, which also allows pressure relief, to pressure.

At this point it should be noted that for the sake of proper operation of the filter it is advisable to fit a check valve at least on the primary branch downstream of the filter.

The head 13 itself might also include check valves downstream and/or upstream of the three-way valves.

The three-way valves might be motorised in order to automate their operation.

It should also be noted that the filter according to the invention can be used with other filtration means of the mechanical type, other than cartridges, such as for example devices which use filter beds or, with optional adaptations, filters of another kind, such as bag filters, basket filters, etcetera.

Finally, it is noted that it is possible to use reverse-flow cartridges in several configurations of the filter according to the invention.

The present invention is susceptible of numerous modifications and variations, all of which are within the scope of the same inventive concept as defined by the claims; thus, for example, the valves can be of the spherical or frustum-shaped type or in any case shaped like a solid of revolution.

The technical details may be replaced with other technically equivalent elements.

The materials employed, as well as the dimensions, may be any according to requirements.

## Claims

1. A filter for liquids (10; 110; 210; 310; 410; 510; 610), comprising a hollow body (11; 111; 211; 311; 511) which is closed by a head (13; 113; 213; 313; 513) and contains at least one filtering medium (12; 112; 212; 312; 512), said head being crossed by a through manifold (15; 115; 215; 315; 515) having inlet and outlet ports (16, 17; 116,117; 217; 317; 517) and from which at least a first connecting duct (22; 122; 222; 322; 522), branches out to connect to said at least one filtering medium (12; 112; 212; 312; 512), **characterised in that** the head further comprises at least a second and a third connecting duct (23,24; 123,124; 223,224; 323,324; 523,524) each of which branches out from said manifold to connect to free parts of an inside region of said hollow body (11; 111; 211; 311; 511), and a port (20; 119; 219; 319; 519), which leads outwards and extends from a region where one of said connecting ducts branches out from said manifold (15; 115; 215; 315; 515), at least the outlets into said manifold of said at least second and third connecting ducts (23,24; 123,124;223,224; 323,324; 523,524) being controlled by respective flow diverter valves (26a,26b,26c; 126a,126b,126c; 326a,326b,326c; 426a,426b,426c; 526a,526b; 626a,626b).

2. The filter for liquids according to claim 1, **characterised in that** said at least one filtering medium (12; 112; 212; 312; 512) comprises at least one filter cartridge which is associated with said head (13; 113; 213; 313; 513), said at least one connecting duct (22; 122; 222; 322; 522) leading to said at least one filtering medium ending inside said at least one filter cartridge.

3. The filter according to claim 2, **characterised in that** said outwards-leading port (20; 119; 219; 319; 519) constitutes a drain port.

4. The filter according to claim 1, **characterised in that** a three-way valve (26a,26b,26c; 126a,126b,126c) is housed in the head (13; 113) at each of the outlets where the first (22, 122), second (13, 113) and third (24, 124) ducts lead into said manifold (15; 115).

5. The filter according to claim 1, **characterised in that** said head (313) houses a valve at each one of the outlets where the first (22, 122), second (23, 123) and third (24, 124) ducts lead into said manifold (315), one (326c) of said valves (326a,326b,326c) being of a one-way or two-way type, the other two valves (326a,326b) being of a three-way type.

6. The filter according to claim 5, **characterised in that** said one-way valve (326c) is of a type with a straight passage.

7. The filter according to claim 5, **characterised in that** said two-way valve (326c) is of a type with an L-shaped angular passage.

8. The filter according to claim 1, **characterised in that** said head (13; 113; 213; 313) houses a valve at each one of the outlets where the first (22, 122), second (23, 123) and third (24, 124) ducts lead into said manifold (15; 115; 215; 315), two (426a,426b; 426a,426c) of said valves (426a,426b,426c) being of a two-way type or three-way type, two (426a,426c) of said valves being of a three-way type.

9. The filter according to claim 8, **characterised in that** said two-way valves (426a,426b) are of a type with angular L-shaped passage.

10. The filter according to claim 1, **characterised in that** said head (513) houses a valve at each one of the outlets into said manifold (515) of said second and third connecting ducts (523,524), one (526a; 626a) of said valves (526a,526b; 626a,626b) being of a three-way type, another one (526b; 626b) being of a two-way type.

11. The filter according to claim 10, **characterised in that** said two-way valve (526b) is of a straight-passage type.

12. The filter according to claim 10, **characterised in that** said two-way valve (626b) is of a type with an L-shaped angular passage.

13. The filter according to claim 1, **characterized in that** said at least first connecting duct (22; 122; 222; 322; 522) and said at least second and third connecting ducts (23,24; 123,124; 223,224; 323,324; 523,524) are perpendicular to said manifold (15; 115; 215; 315; 515).

14. The filter according to claim 1, **characterised in that** said connecting port (20; 119; 219; 319; 519) leading to the outside of said head (13; 113; 213; 313; 513), which extends from the region where one or the connecting ducts (23,24; 223,224; 323,324; 523,524) branches out from said manifold, is perpendicular to said manifold.

15. The filter according to claim 1, **characterised in that** each one of said valves is shaped so as to form a knob (28a,28b,28c) which is suitable for actuation by an operator.

16. The filter according to claim 1, **characterised in that** said head includes respective check valves downstream and/or upstream of said valves.

17. The filter according to claim 1, **characterised in that** said valves are motorised.

## Revendications

1. Filtre pour liquides (10 ; 110 ; 210 ; 310 ; 410 ; 510 ; 610), comprenant un corps creux (11 ; 111 ; 211 ; 311 ; 511) qui est fermé par une tête (13 ; 113 ; 213 ; 313 ; 513) et qui contient au moins un milieu de filtrage (12 ; 112 ; 212 ; 312 ; 512), ladite tête étant traversée par un collecteur traversant (15 ; 115 ; 215 ; 315 ; 515) comportant des orifices d'entrée et de sortie (16, 17 ; 116, 117 ; 217 ; 317 ; 517) et à partir duquel part au moins un premier conduit de raccordement (22 ; 122 ; 222 ; 322 ; 522) pour raccordement audit au moins un milieu de filtrage (12 ; 112 ; 212 ; 312 ; 512), **caractérisé en ce que** la tête comprend en outre au moins des deuxième et troisième conduits de raccordement (23, 24 ; 123, 124 ; 223, 224 ; 323, 324 ; 523, 524) partant chacun dudit collecteur pour raccordement à des parties libres d'une région intérieure dudit corps (11 ; 111 ; 211 ; 311 ; 511), et un orifice (20 ; 119 ; 219 ; 319 ; 519), qui mène à l'extérieur et s'étend depuis une région où l'un desdits conduits de raccordement, part dudit collecteur (15 ; 115 ; 215 ; 315 ; 515), au moins les sorties dudit collecteur desdits au moins deuxième et troisième conduits de raccordement (23, 24 ; 123, 124 ; 223, 224 ; 323, 324 ; 523, 524) étant régulées par des vannes de dérivation d'écoulement respectives (26a, 26b, 26c ; 126a, 126b, 126c ; 326a, 326b, 326c ; 426a, 426b, 426c ; 526a, 526b ; 626a, 626b).

2. Filtre pour liquides selon la revendication 1, **caractérisé en ce qu'**au moins un milieu de filtrage (12 ; 112 ; 212 ; 312 ; 512) comprend au moins une cartouche de filtre qui est associée à ladite tête (13 ; 113 ; 213 ; 313 ; 513), ledit au moins un conduit de raccordement (22 ; 122 ; 222 ; 322 ; 522) menant audit au moins un milieu de filtrage, en se terminant à l'intérieur de ladite au moins une cartouche de filtre.

3. Filtre selon la revendication 2, **caractérisé en ce que** ledit orifice menant vers l'extérieur (20 ; 119 ; 219 ; 319 ; 519) constitue un orifice de drainage.

4. Filtre selon la revendication 1, **caractérisé en ce qu'**une vanne à trois voies (26a, 26b, 26c ; 126a, 126b, 126c) est logée dans la tête (13 ; 113) au niveau de chacune des sorties où les premier (22, 122), deuxième (13, 113) et troisième (24, 124) conduits mènent audit collecteur (15 ; 115).

5. Filtre selon la revendication 1, **caractérisé en ce que** ladite tête (313) loge une vanne à chacune des sorties où les premier (22, 122), deuxième (23, 123) et troisième (24, 124) conduits mènent audit collecteur (315), l'une (326c) desdites vannes (326a, 326b, 326c) étant de type à une voie ou à deux voies, les deux autres vannes (326a, 326b) étant de type à trois voies.

6. Filtre selon la revendication 5, **caractérisé en ce que** ladite vanne à une voie (326c) est de type à passage droit.

7. Filtre selon la revendication 5, **caractérisé en ce que** ladite vanne à deux voies (326c) est de type à passage angulaire en forme de L.

8. Filtre selon la revendication 1, **caractérisé en ce que** ladite tête (13 ; 113 ; 213 ; 313) loge une vanne à chacune des sorties où les premier (22, 122), deuxième (23, 123) et troisième (24, 124) conduits mènent audit collecteur (15 ; 115 ; 215 ; 315), deux (426a, 426b ; 426a, 426c) desdites vannes (426a, 426b, 426c) étant de type à deux voies ou de type à trois voies, deux (426a, 426c) desdites vannes étant de type à trois voies.

9. Filtre selon la revendication 8, **caractérisé en ce que** lesdites vannes à deux voies (426a, 426b) sont de type à passage angulaire en forme de L.

10. Filtre selon la revendication 1, **caractérisé en ce que** ladite tête (513) loge une vanne à chacune des sorties menant audit collecteur (515) desdits deuxième et troisième conduits de raccordement (523, 524), l'une (526a ; 626a) desdites vannes (526a, 526b ; 626a, 626b) étant de type à trois voies, une autre (526b ; 626b) étant de type à deux voies.

11. Filtre selon la revendication 10, **caractérisé en ce que** ladite vanne à deux voies (526b) est de type à passage droit.

12. Filtre selon la revendication 10, **caractérisé en ce que** ladite vanne à deux voies (626b) est de type à passage angulaire en forme de L.

13. Filtre selon la revendication 1, **caractérisé en ce qu'**au moins ledit premier conduit de raccordement (22 ; 122 ; 222 ; 322 ; 522) et lesdits au moins deuxième et troisième conduits de raccordement (23, 24 ; 123, 124 ; 223, 224 ; 323, 324 ; 523, 524) sont perpendiculaires audit collecteur (15 ; 115 ; 215 ; 315 ; 515).

14. Filtre selon la revendication 1, **caractérisé en ce que** ledit orifice de raccordement (20 ; 119 ; 219 ; 319 ; 519) menant à l'extérieur de ladite tête (13 ; 113 ; 213 ; 313 ; 513), qui s'étend de la région où l'un des conduits de raccordement (23, 24 ; 223, 224 ; 323, 324 ; 523, 524) part dudit collecteur, est perpendiculaire audit collecteur.

15. Filtre selon la revendication 1, **caractérisé en ce que** chacune desdites vannes est formée de façon à former un bouton (28a, 28b, 28c) qui est approprié pour manoeuvre par un opérateur.

16. Filtre selon la revendication 1, **caractérisé en ce que** ladite tête comprend des soupapes d'arrêt respectives en aval et/ou en amont desdites vannes.

17. Filtre selon la revendication 1, **caractérisé en ce que** lesdites vannes sont motorisées.

## Patentansprüche

1. Filter für Flüssigkeiten (10; 110; 210; 310; 410; 510; 610), umfassend einen Hohlkörper (11; 111; 211; 311; 511), der durch einen Kopf (13; 113; 213; 313; 513) geschlossen ist und wenigstens ein Filtermedium (12; 112; 212; 312; 512) enthält; wobei durch den Kopf ein durchgehendes Sammel-/Verteilerrohr (15; 115; 215; 315; 515) verläuft, welches Einlass- und Auslassöffnungen (16, 17; 116, 117; 217; 317; 517) aufweist und von dem aus wenigstens ein erster Verbindungskanal (22; 122; 222; 322; 522) abzweigt, um die Verbindung mit dem besagten, wenigstens einen Filtermedium (12; 112; 212; 312; 512) herzustellen, **dadurch gekennzeichnet, dass** der Kopf des weiteren umfasst: wenigstens einen zweiten und einen dritten Verbindungskanal (23,24; 123,124; 223,224; 323,324; 523,524), die jeweils von dem besagten Sammel-/Verteilerrohr abzweigen, um die Verbindung mit freien Teilen eines inneren Bereiches des Hohlkörpers (11; 111; 211; 311; 511) herzustellen, sowie eine Öffnung (20; 119; 219; 319; 519), die nach außen führt und sich von einem Bereich aus erstreckt, in dem einer der Verbindungskanäle von dem Sammel-/Verteilerrohr (15; 115; 215; 315; 515) abzweigt, wobei wenigstens die in das Sammel-/Verteilerrohr führenden Auslassöffnungen der, wenigstens vorhandenen, zweiten und dritten Verbindungskanäle (23,24; 123,124; 223,224; 323,324; 523,524) durch jeweilige Strömungsumleitventile (26a,26b,26c; 126a,126b,126c; 326a,326b,326c; 426a,426b,426c; 526a,526b; 626a,626b) gesteuert werden.

2. Filter für Flüssigkeiten nach Anspruch 1, **dadurch gekennzeichnet, dass** das wenigstens eine Filtermedium (12; 112; 212; 312; 512) wenigstens eine Filterpatrone umfasst, die dem Kopf (13; 113; 213; 313; 513) zugeordnet ist, wobei der besagte, wenigstens eine Verbindungskanal (22; 122; 222; 322; 522), welcher zu dem wenigstens einen Filtermedium führt, innerhalb der wenigstens einen Filterpatrone endet.

3. Filter nach Anspruch 2, **dadurch gekennzeichnet, dass** die nach außen führende Öffnung (20; 119; 219; 319; 519) eine Ausflussöffnung darstellt.

4. Filter nach Anspruch 1, **dadurch gekennzeichnet, dass** ein Dreiwegeventil (26a,26b,26c; 126a,126b,126c) in dem Kopf (13; 113) an jedem der Auslässe untergebracht ist, wo der erste (22, 122), der zweite (13, 113) und der dritte (24, 124) Kanal in das Sammel-/Verteilerrohr (15; 115) führen.

5. Filter gemäß Anspruch 1, **dadurch gekennzeichnet, dass** der Kopf (313) ein Ventil an jedem der Auslässe aufweist, wo der erste (22, 122), der zweite (23, 123) und der dritte (24, 124) Kanal in das Sammel-/Verteilerrohr (315) führen, wobei eines (316c) der Ventile (326a, 326b,326c) ein Ventil vom Einweg-Typ oder Zweiwege-Typ ist und die anderen beiden Ventile (326a,326b) Ventile vom Dreiwege-Typ sind.

6. Filter nach Anspruch 5, **dadurch gekennzeichnet, dass** das Einwegventil (326c) einem Ventiltyp mit geradem Durchtritt entspricht.

7. Filter nach Anspruch 5, **dadurch gekennzeichnet, dass** das Zweiwegeventil (326c) einem Ventiltyp mit L-förmig abgewinkeltem Durchtritt entspricht.

8. Filter nach Anspruch 1, **dadurch gekennzeichnet, dass** in dem Kopf (13; 113; 213; 313) ein Ventil untergebracht ist, und zwar an jedem der Auslässe, wo der erste (22, 122), der zweite (23, 123) und der dritte (24, 124) Kanal in das Sammel-/Verteilerrohr (15; 115; 215; 315) führen, wobei zwei (426a,426b; 426a,426c) dieser Ventile (426a,426b,426c) solche vom Zweiwege-Typ oder Dreiwege-Typ sind, und zwei (426a, 426c) dieser Ventile solche vom Dreiwege-Typ sind.

9. Filter nach Anspruch 8, **dadurch gekennzeichnet, dass** die Zweiwegeventile (426a,426b) einem Ventiltyp mit abgewinkeltem, L-förmigen Durchtritt entsprechen.

10. Filter nach Anspruch 1, **dadurch gekennzeichnet, dass** in dem Kopf (513) ein Ventil untergebracht ist, und zwar an jedem der in das Sammel-/Verteilerrohr (515) führenden Auslässe des zweiten und dritten Verbindungsganges (523, 524), wobei eines (526a;626a) dieser Ventile (526a,526b; 626a,626b) ein Ventil vom Dreiwege-Typ und ein anderes (526b;626b) ein Ventil vom Zweiwege-Typ ist.

11. Filter nach Anspruch 10, **dadurch gekennzeichnet, dass** das Zweiwegeventil (526b) einem Ventiltyp mit geradem Durchtritt entspricht.

12. Filter nach Anspruch 10, **dadurch gekennzeichnet, dass** das Zweiwegeventil (626b) einem Ventiltyp mit L-förmig abgewinkeltem Durchtritt entspricht.

13. Filter nach Anspruch 1, **dadurch gekennzeichnet, dass** der wenigstens vorhandene erste Verbindungskanal (22, 122; 222; 322; 522) und der wenigstens vorhandene zweite und dritte Verbindungskanal (23,24; 123,124; 223,224; 323,324; 523,524) senkrecht zu dem Sammel-/Verteilerrohr (15; 115; 215; 315; 515) verlaufen.

14. Filter nach Anspruch 1, **dadurch gekennzeichnet, dass** der zur Außenseite des Kopfes (13; 113; 213; 313; 513) führende Verbindungskanal (20; 119; 219; 319; 519), der sich von dem Bereich aus erstreckt, in dem einer der Verbindungskanäle (23,24; 223,224; 323,324; 523,524) von dem Sammel-/Verteilerrohr abzweigt, senkrecht zu dem besagten Sammel-/Verteilerrohr verläuft.

15. Filter nach Anspruch 1, **dadurch gekennzeichnet, dass** jedes der Ventile so geformt ist, dass es einen Knopf (28a, 28b, 28c) bildet, der für die Betätigung durch eine bedienende Person geeignet ist.

16. Filter nach Anspruch 1, **dadurch gekennzeichnet, dass** der Kopf hinter und/oder nach den Ventilen jeweils Rückschlagventile aufweist.

17. Filter nach Anspruch 1, **dadurch gekennzeichnet, dass** die Ventile motorgetrieben sind.
